# EUROPÄISCHE PATENTANMELDUNG

(11) **EP 0 556 567 A1**
(43) Veröffentlichungstag der Anmeldung: **25.08.1993**
(21) Anmeldenummer: 93100600.1
(22) Anmeldetag: 16.01.1993
(51) Int. Cl.: B01D 53/22

(54) **Verfahren zur Trennung von organischen Bestandteilen aus Gasgemischen**

(30) Priorität: 08.02.1992 DE 4203634
(71) Anmelder: GKSS-FORSCHUNGSZENTRUM GEESTHACHT GMBH, D-21502 Geesthacht (DE); SILICA VERFAHRENSTECHNIK GmbH, D-14050 Berlin (DE)
(72) Erfinder: Behling, Rolf-Dieter, Dr., W-2000 Hamburg 55 (DE); Ohlrogge, Klaus, W-2054 Geesthacht (DE); Wind, Jan, W-2000 Barsbüttel (DE); Schlicht Burkhard, W-1144 Berlin (DE); Höhne Gert, W-1000 Berlin 28 (DE)
(74) Vertreter: Niedmers, Ole, Dipl.-Phys.

(57) **Zusammenfassung**

Es wird ein Verfahren zur Trennung von organischen Bestandteilen aus Gasgemischen vorgeschlagen, bei dem das zu trennende primäre Gasgemisch auf eine Membrantrennstufe geführt wird, in der das zu trennende Gasgemisch in ein mit organischen Verbindungen angereichertes Permeat, das dem primären Gasgemisch erneut zugeführt wird, und in ein mit organischen Verbindungen abgereichertes Retentat getrennt wird. Nachfolgend werden aus dem Retentat über einen Adsorptionsvorgang in einer Adsorbereinrichtung die organischen Verbindungen entfernt und das derart gereinigte Retentatgas (Abgas) an die Umgebung abgegeben, wobei wenigstens ein Teil des gereinigten Retentatgases als Regeneriergas zur Desorption der dazu in vorbestimmbaren Zyklus invers betriebener Adsorbereinrichtung auf diese zurückgeführt wird.

## Beschreibung

Die Erfindung betrifft ein Verfahren zur Trennung von organischen Bestandteilen aus Gasgemischen bei dem das zu trennende primäre Gasgemisch Druckerhöhung als Option auf eine Membrantrennstufe geführt wird, in der das zu trennende Gasgemisch in ein mit organischen Verbindungen angereichertes Permeat, das dem primären Gasgemisch erneut zugeführt wird, und in ein mit organischen Verbindungen abgereichertes Retentat getrennt wird.

Bedingt durch das Inkrafttreten von Gesetzen, die den Anteil an organischen Substanzen in der Austrittsluft von Einrichtungen in der Bundesrepublik Deutschland regeln (festgehalten in der sogenannten TA Luft) ist festgelegt worden, daß beispielsweise der Anteil organischer Substanzen der Klasse III eine Endkonzentration von 150 mg/m³ nicht überschreiten dürfen, während sogar bei karzinogenen Stoffen wie Benzol eine Endkonzentration von 5 mg/m³ nicht überschritten werden darf. Um diese extremen aber sinnvollen Grenzwerte maximal zulässiger Konzentrationen für die vorgenannten Stoffe tatsächlich einhalten zu können, war die Fachwelt bisher der Meinung, daß der Trennvorgang von organischen Bestandteilen aus Gasgemischen auf diese Maximalwerte zulässiger Konzentrationen organischer Substanzen einerseits mit einem erheblichen Energiebedarf verbunden ist und andererseits, ob nicht mit der Verringerung des Anteils organischer Substanzen in der Abluft zusätzlich ebenfalls schädliche Verbindungen wie CO₂, NOₓ sowie Staub und andere schädliche Emissionen entstehen (R. Pelzer, Betriebserfahrungen mit drei Varianten der Preussag - Vapoured - Anlage zur Kohlenwasserstoff-Emissionsreduzierung auf Großtanklägern/ DGMK Tagungsbericht 9/02).

Es sind verschiedene Lösungsansätze der Fachwelt vorgeschlagen worden, die einen verhältnismäßig großen verfahrensmäßigen Aufwand erforderten und insgesamt verschiedene Nachteile hatten, indem sie beispielsweise einen sehr hohen Energiebedarf bei der Durchführung des Verfahrens hatten oder aber die eigentliche Trennaufgabe, nämlich möglichst geringe Konzentrationen organischer Verbindungen in der Abluft zu haben, nicht erfüllen konnten, oder aber nicht in der Lage waren, spezifische organische Verbindungen, wie beispielsweise das niedrig siedende Methan, Ethan oder Propan aus der Abluft zu entfernen.

Es ist Aufgabe der vorliegenden Erfindung, ein Verfahren zu schaffen, das breitbandig in der Lage ist, organische Bestandteile aus einem Gasgemisch zu entfernen, ohne daß dazu hohe zusätzliche Energien erforderlich sind, bei dem keine zusätzlichen Schadstoffe beim Trennvorgang entstehen, das einfach und kostengünstig durchführbar ist und zudem in der Lage ist, wenigstens teilweise das das Verfahren durchführende System zu regenerieren.

Gelöst wird die Aufgabe gemäß der Erfindung dadurch, daß aus dem Retentat nachfolgend über einen Adsorptionsvorgang in einer Adsorbereinrichtung die organischen Verbindung entfernt werden und das derart gereinigte Retentatgas an die Umgebung abgebbar ist, wobei wenigstens ein Teil des gereinigten Retentatgases als Regeneriergas zur Desorption der dazu in vorbestimmbarem Zyklus invers betriebenen Adsorbereinrichtung auf diese zurückgeführt wird.

Der wesentliche Vorteil des erfindungsgemäßen Verfahrens besteht darin, daß die Trennung der organischen Bestandteile aus Gasgemisches zunächst in einer Membrantrennstufe und anschließend in einer Adsorbereinrichtung in einem aus diesen Komponenten gebildeten integralen System durchgeführt werden kann, wobei die treibende Kraft für das Gesamtverfahren wenigstens die Partialdruckdifferenz ist, die für die Funktion einer Membrantrennstufe in jedem Falle aufgebaut werden muß. Das Druckinventar aus dem Membrantrennprozeß kann dann für den Adsorptionsvorgang vollständig genutzt werden, d. h. es ist darüber hinaus nur ein geringer Energiebedarf, bedingt durch die Regeneration des Absorber für den Trennvorgang nötig. Ein weiterer Vorteil des erfindungsgemäßen Verfahrens besteht darin, daß durch die Trennung des Permanentgasgemisches in der Membrantrennstufe eine Trocknung des aus der Membran austretenden, mit organischen Verbindungen abgereicherten Retentats erfolgt und somit vorteilhafterweise eine Blockierung des Adsorbents durch Wasserdampf aus dem primären zu trennenden Gasgemisch unterdrückt wird.

Ein weiterer wesentlicher Vorteil des erfindungsgemäßen Verfahrens besteht schließlich darin, daß das Regeneriergas für die Regeneration der Adsorbereinrichtung aus der Abluft, die das System, mit dem das erfindungsgemäße Verfahren durchgeführt wird, verläßt, eben dieser Abluft entnommen werden kann, so daß keine zusätzliche Belastung der Umgebungsluft durch den Regenerationsvorgang erfolgt, wie es aber bei bisher im Stand der Technik bekannten Systemen, die Adsorbereinrichtungen verwenden, der Fall ist.

Gemäß einer vorteilhaften Ausgestaltung des Verfahrens wird das durch den niederdruckbetriebenen Desorptionsvorgang mit organischen Verbindungen angereicherte Regeneriergas dem primären Gasgemisch erneut zugeführt, was den Vorteil hat, daß bezüglich der mit organischen Verbindungen angereicherten Gasteilströme ein inneres geschlossenes System geschaffen wird, so daß keine gesonderten Maßnahmen getroffen werden müssen, auch aus dem Regeniergas wiederum gesondert die organischen Verbindungen zu entfernen.

Bei einer weiteren vorteilhaften Ausgestaltung des Verfahrens ist die Menge des für den Desorptionsvorgang benötigten Regeniergases einstellbar, und zwar je nach der Größe der für den vollständigen Desorptionsvorgang erforderlichen Zeit und Menge.

Um fortwährend gleiche Betriebsparameter der Membrantrennstufe aber auch anderer Komponenten, die zur Durchführung des Verfahrens benötigt werden, zu erreichen, ist es vorteilhaft, daß bei der Umsteuerung der Adsorbereinrichtung von Adsorptionsbetrieb auf Desorptionsbetrieb und/oder Desorptionsbetrieb auf Adsorptionsbetrieb Puffervolumen vorgesehen werden, die auftretende Druckstöße zu dämpfen und den Umschaltvorgang zu beschleunigen.

Der Adsorptionsvorgang wird vorteilhafterweise mehrstufig unter Verwendung unterschiedlicher Adsorbentien durchgeführt, die derart gewählt sind, daß sie die im von der Membrantrennstufe im abgereicherten Retentat enthaltenen organischen Verbindungen jeweils gezielt adsorbieren können, beispielsweise die schwersiedenden Komponenten in einem Adsorbenz und die leichtsiedenden Komponenten in dem anderen Adsorbenz.

Es ist vorteilhafterweise ebenfalls möglich, den Adsorptions- und/oder Desorptionsvorgang durch Parallel- oder Wechselbetrieb einer Mehrzahl von Adsorptionseinrichtungen durchzuführen, was wiederum den Vorteil hat, daß beispielsweise im Parallelbetrieb größere Gasdurchlaufmengen erreichbar sind.

Obwohl die verschiedensten geeigneten Adsorbentien zur Durchführung des Adsorptionsbetriebes verwendet werden können, hat es sich z.B. bei der Abtrennung von Bezindämpfen als vorteilhaft erwiesen, als wenigstens ein Adsorbenz Aktivkohle und/oder als wenigstens ein anderes Adsorbenz ein Kohlenmolekularsieb zu verwenden, wobei die Aktivkohle die schwersiedenden organischen Verbindungen des abgereicherten zugeführten Retentats adsorbiert, während das Kohlenstoffmolekularsieb beispielsweise die leichtsiedenden organischen Verbindungen adsorbiert.

Wie eingangs erwähnt, wird für den gesamten Trennvorgang im wesentlichen lediglich das Druckinventar des Trennsystems verwendet, das nötig ist, um den ersten Trennschritt in der Membrantrennstufe auszuführen. Dabei ist es grundsätzlich egal, ob auf der Seite der Membrantrennstufe, die die Zufuhrseite des zu trennenden primären Gasgemisches ist, eine Druckerhöhung erzeugt wird, oder aber vorteilhafterweise, ggf. zusätzlich, an der Membranstufe permeatseitig ein Vakuum erzeugt wird, das vorteilhafterweise ebenfalls zur Durchführung des Desorptionsvorganges nutzbar ist.

Schließlich werden vorzugsweise dem mit organischen Verbindungen angereicherten Permeatgas vor der Zuführung zum primären Gasgemisch durch einen Abscheidevorgang die organischen Verbindungen wenigstens teilweise entzogen, beispielsweise mittels eines gesonderten Aborbers oder eines Kühlers, dessen Kondensat beispielsweise in einen Sammeltank gegeben werden kann.

Die Erfindung wird nun unter Bezugnahme auf eine einzige schematische Zeichnung anhand eines Ausführungsbeispieles eingehend beschrieben. Diese zeigt:
In Form eines Blockschaltbildes alle wesentlichen Komponenten einer integrierten Trennvorrichtung, mit der das erfindungsgemäße Verfahren ausführbar ist.

Die Vorrichtung bzw. das System 10 zur Durchführung des Verfahrens zur Trennung von Permanentgasgemischen umfaßt im wesentlichen eine Membrantrennstufe 13 sowie eine Adsorptionseinrichtung 17, die eine integrale Einheit bilden.

Das zu trennende primäre Gasgemisch 11, beispielsweise mit organischen Verbindungen angereicherte Luft, wird über eine Leitung auf einen Verdichter 12 geführt und in druckerhöhter Form, ggf. unter Zwischenschaltung einer Kondensations-/Absorptionseinheit 14, auf eine Membrantrennstufe 13 gegeben. Membrantrennstufen 13 dieser Art, die beispielsweise mit einer Polymermembran arbeiten, sind bekannt, so daß auf diese an dieser Stelle nicht weiter eingegangen zu werden braucht. In der Membrantrennstufe 13 wird das zu trennende Gasgemisch 11 in ein mit organischen Verbindungen angereichertes Permeat 16 und in ein mit organischen Verbindungen abgereichertes Retentat 15 getrennt. Über ein 4-Wege-Ventil 23 wird das Retentat auf die Adsorptionseinrichtung 17 gegeben, wobei in dem hier dargestellten Ausführungsbeispiel die Adsorptionseinrichtung 17 aus zwei getrennten parallel geschalteten Adsorptionseinrichtungen 170, 171 bzw. 172, 173 besteht, die wiederum jeweils aus zwei in Reihe geschalteten Adsorbern 170, 171 bzw. 172, 173 bestehen. Die Adsorber 170, 172 können beispielsweise als Adsorbienten Aktivkohle enthalten, während die Adsorber 171, 173 beispielsweise als Adsorbentien Kohlenstoffmolekularsiebe enthalten, wobei mit der Aktivkohle schwersiedende organische Komponenten adsorbiert werden, während mit den Kohlenstoffmolekularsieben leichtsiedende organische Verbindungen adsorbiert werden können.

Ausgangsseitig ist die Adsorbereinrichtung 17 über ein Vierwegeventil 24 angeschlossen, das selbst ausgangsseitig mit einem Druckhalteventil 25 verbunden ist, aus dem ausgangsseitig das von organischen Verbindungen gereinigte Retentatgas, d. h. das die Vorrichtung bzw. das System 10 verlassende Abgas 18 austritt, d. h. an die Umgebung abgegeben wird.

Die Membrantrennstufe 13 ist permeatseitig 16 mit der Saugseite einer Vakuumpumpe 21 zur Erzeugung eines permeatseitigen Vakuums verbunden. Der Vakuumpumpe 21 nachgeschaltet kann eine Kondensations-/Absorptionseinheit nachgeschaltet sein, um ggf. organische Verbindungen aus dem mit organischen Verbindungen angereicherten Permeatgas abzutrennen.

Das Kondensat der Kondensations-/Absorptionseinheiten 14, 22 wird auf einen hier nicht dargestellten Sammeltank geleitet.

Der Kondensations-/Absorptionseinheit 22 nachfolgend ist eine Verbindungsleitung 26 vorgesehen, über die das Retentat mit den restlichen, in der Kondensations-/ Absorptionseinheit 22 nicht abgetrennten organischen Verbindungen erneut dem primären Gasgemisch 11 zugeführt wird.

Die jeweils in Reihe geschalteten Adsorber 170, 171 bzw. 172, 173 können zeitabhängig und/oder konzentrationsabhängig, d. h. in einem vorbestimmbaren wählbaren Zyklus über die 4-Wege-Ventile 23, 24 zum Beladen, d. h. für den normalen Adsorptionsvorgang oder zur Desorption, d. h. zur Durchführung des Desorptionsvorganges umgeschaltet werden.

Um Rückstöße bei diesen Umschaltvorgängen zu dämpfen, sind Behälter 19 und 20 vorgesehen, die ein Puffervolumen schaffen. So ist der Behälter 19 in die Entspannungsleitung 27, die zum primären zu trennenden Gasgemisch 11 führt, geschaltet, während Behälter 20 mit der Vakuumseite der Vakuumpumpe 21 verbunden ist, um über das 4-Wege-Ventil 23 zur Vakuumdesorption der Adsorbereinrichtung 17 verbunden werden zu können.

Der Druckabbau in der Entspannungsleitung 27 wird über ein Feinstregelventil 28 eingestellt. Um einen Rückstrom zu verhindern, ist in die Eintrittsleitung 29 ein Rückschlagventil 30 eingefügt.

Das der Adsorptionseinrichtung 17 nachfolgende 4-Wege-Ventil 24 dient dazu, den Strom des gereinigten Retentatgases (Abgas) 18 zu steuern, und zwar mittels eines damit zusammenwirkenden Druckhalteventils 31, wobei, wie schon erwähnt, das 4-Wege-Ventil 24 auch dazu dient, für den Desorptionsvorgang der Adsorptionseinrichtung 17 den Regeneriergasstrom, der aus dem gereinigten Retentatgas 18 erzeugt wird, zu steuern. Die Spülmenge, die dem gereinigten Retentatgas (Abgas) 18 zwischen dem 4-Wege-Ventil 24 und dem Druckhalteventil 25 entnommen wird, wird über das die Funktion eines Regelventils ausübende Druckhalteventil 31 eingestellt.

Es sei darauf hingewiesen, daß wahlweise entweder der Verdichter 12 oder die Vakuumpumpe 21 entfallen können.

Die Vorrichtung bzw. das System 10 zur Ausführung des Verfahrens wird bevorzugt so betrieben, daß ein Teil des gereinigten Retentatgases (Abgas) 18 nach dem zweiten Adsorber 171; 173 als Regeneriergas für die gesamte Adsorptionseinrichtung 17 genutzt werden kann. Während des Betriebes der Vorrichtung bzw. des Systems 10 wird der Überdruck nach der Umschaltung zur Regeneration der Adsorptionseinrichtung 17 über den Pufferbehälter 19 sowie das Feinstregelventil 28 langsam abgebaut und über die Entspannungsleitung 27 dem primären zu trennenden Gasgemisch beigemischt.

Nach erfolgter Entspannung erfolgt die Regeneration der Adsorptionseinrichtung 17 mittels Vakuums, wobei die Vakuumpumpe 21 der Membrantrennstufe 13 dazu genutzt wird. Das Aufbauen des Unterdrucks kann durch den Pufferbehälter 20, der zu geeigneter Zeit evakuiert wird, beschleunigt werden. Die Regeneration wird durch den Regeneriergasstrom, der ein Teilstrom des gereinigten Retentatgases (Abgas) 18 ist, unterstützt. Das mit organischen Verbindungen dann angereicherte Regeneriergas wird der Kondensations-/Absorptionseinheit 22, über die auch das Permeat 16 geleitet wird, zugeführt, oder direkt dem primären zu trennenden Gasgemisch 11. Das gereinigte getrocknete Retentatgas (Abgas) 18 kann auch als Steuerluft für pneumatisch betreibbare Schaltventile der Vorrichtung 10 genutzt werden.

Ein wesentlicher Vorteil des hier vorgeschlagenen Verfahrens ist der, daß die gesetzlich geforderten Konzentrationswerte (TA Luft) einerseits vollständig eingehalten werden können und andererseits dieses mit nur geringfügig zusätzlichem Energieaufwand erzielt wird.

### Bezugszeichenliste

- 10: Vorrichtung (System)
- 11: primäres zu trennendes Gasgemisch
- 12: Verdichter
- 13: Membrantrennstufe
- 14: Kondensations-/Absorptionseinheit
- 15: Retentat
- 16: Permeat
- 17: Adsorptionseinrichtung
- 170: Adsorber
- 171: Adsorber
- 172: Adsorber
- 173: Adsorber
- 18: gereinigtes Retentatgas (Abgas)
- 19: Pufferbehälter
- 20: Pufferbehälter
- 21: Vakuumpumpe
- 22: Kondensations-/Absorptionseinheit
- 23: 4-Wege-Ventil
- 24: 4-Wege-Ventil
- 25: Druckhalteventil
- 26: Verbindungsleitung
- 27: Entspannungsleitung
- 28: Feinstregelventil
- 29: Eintrittsleitung
- 30: Rückschlagventil
- 31: Druckhalteventil

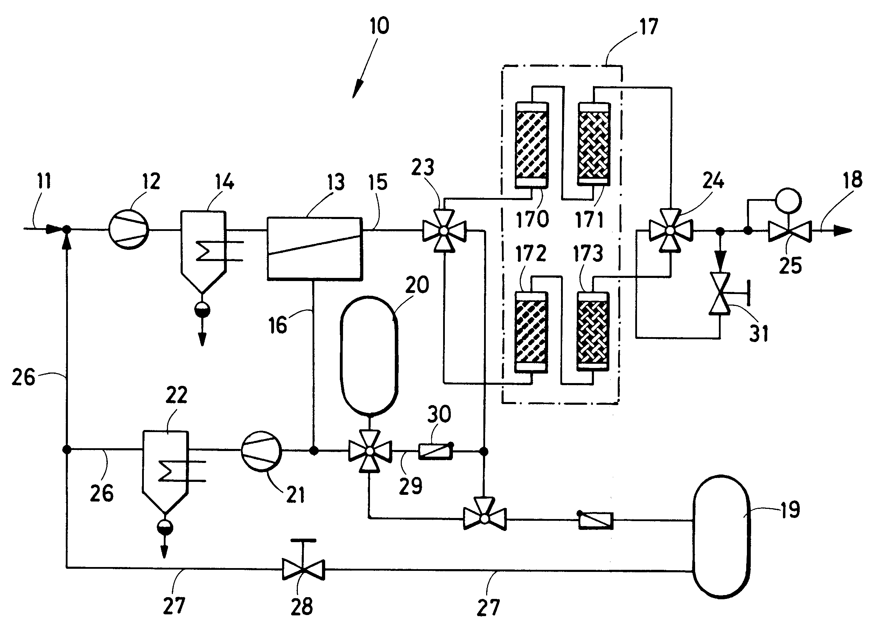

## Patentansprüche

1. Verfahren zur Trennung von organischen Bestandteilen aus Gasgemischen, bei dem das zu trennende primäre Gasgemisch auf eine Membrantrennstufe geführt wird, in der das zu trennende Gasgemisch in ein mit organischen Verbindungen angereichertes Permeat, das dem primären Gasgemisch erneut zugeführt wird, und in ein mit organischen Verbindungen abgereichertes Retentat getrennt wird, dadurch gekennzeichnet, daß aus dem Retentat nachfolgend über einen Adsorptionsvorgang in einer Adsorbereinrichtung die organischen Verbindungen entfernt werden und der derart gereinigte Retentatgasstrom an die Umgebung abgebbar ist, wobei wenigstens ein Teil des gereinigten Retentatgases als Regeneriergas zur Desorption der dazu in vorbestimmbarem Zyklus invers betriebene Absorbereinrichtung auf diese zurückgeführt wird.

2. Verfahren nach Anspruch 1, dadurch gekennzeichnet, daß das durch den vakuumbetriebenen Desorptionsvorgang mit organischen Verbindungen angereicherte Regeneriergas dem primären Gasgemisch zugeführt wird.

3. Verfahren nach einem oder beiden der Ansprüche 1 oder 2, dadurch gekennzeichnet, daß die Menge des für den Desorptionsvorgang benötigten Regeneriergases einstellbar ist.

4. Verfahren nach einem oder mehreren der Ansprüche 1 bis 3, dadurch gekennzeichnet, daß bei der Umsteuerung der Adsorbereinrichtung von Adsorptionsbetrieb auf Desorptionsbetrieb und/oder Desorptionsbetrieb auf Adsorptionsbetrieb Puffervolumen auftretende Druckstöße dämpfen.

5. Verfahren nach einem oder mehreren der Ansprüche 1 bis 4, dadurch gekennzeichnet, daß der Adsorptionsvorgang mehrstufig unter Verwendung unterschiedlicher Adsorbentien durchführbar ist.

6. Verfahren nach einem oder mehreren der Ansprüche 1 bis 5, dadurch gekennzeichnet, daß der Adsorptions- und/-oder Desorptionsvorgang durch Parallel- oder Wechselbetrieb einer Mehrzahl von Adsorptionseinrichtungen durchgeführt wird.

7. Verfahren nach einem oder beiden der Ansprüche 5 oder 6, dadurch gekennzeichnet, daß als wenigstens ein Adsorbient Aktivkohle und/oder als wenigstens ein anderes Adsorbenz ein Kohlenstoffmolekularsieb verwendet wird.

8. Verfahren nach einem oder mehreren der Ansprüche 5 bis 7, dadurch gekennzeichnet, daß die Absorbentien aus einer Kombination organischen und anorganischen Adsorbentien gebildet werden.

9. Verfahren nach einem oder mehreren der Ansprüche 1 bis 8, dadurch gekennzeichnet, daß an der Membranstufe permeatseitig ein Vakuum erzeugt wird, das ebenfalls zur Durchführung des Desorptionsvorganges nutzbar ist.

10. Verfahren nach einem oder mehreren der Ansprüche 1 bis 9, dadurch gekennzeichnet, daß dem mit organischen Verbindungen angereicherten Permeatgas vor der Zuführung zum primären Gasgemisch durch einen Abscheidevorgang die organischen Verbindungen wenigstens teilweise entzogen werden.
